# EUROPÄISCHE PATENTANMELDUNG

(11) **EP 1 790 413 A1**
(43) Veröffentlichungstag der Anmeldung: **30.05.2007**
(21) Anmeldenummer: 05025594.2
(22) Anmeldetag: 23.11.2005
(51) Int. Cl.: B01J 49/00, C02F 1/42

(54) **Wasseraufbereitungsvorrichtung**

(71) Anmelder: DKS-Wassertechnik AG i.G., 83324 Ruhpolding (DE)
(72) Erfinder: Seita, Werner, 38640 Goslar (DE); Sterff, Sebastian, 83324 Ruhpolding (DE)
(74) Vertreter: Köster, Hajo

(57) **Zusammenfassung**

Bereitgestellt wird eine Vorrichtung zur Herstellung von zumindest teilweise entbastem Wasser mit mindestens einer ersten Tauschersäule (2, 2a), die mit einem insbesondere stark sauren Austauscherharz (5) für Kationen beschickt ist und die flussaufwärts mit einem Wassereinlass (3) für zu entbasendes Wasser und flussabwärts mit einem Wasserauslauf (4) für das entbaste Wasser ausgestattet ist. Diese Vorrichtung (1) ist mit einer Einrichtung zur Regeneration des erschöpften Austauscherharzes (5) mit einer in der ersten Tauschersäule (2, 2a) angeordneten Kathode (6) und einer in der ersten Tauschersäule (2, 2a) angeordneten Anode (7) sowie mit Mitteln, um eine Spannung an die Anode (7) und die Kathode (6) anzulegen, ausgestattet. Zudem ist das Austauscherharz (5) zwischen der Anode (7) und der Kathode (6) angeordnet.

## Beschreibung

Die Erfindung betrifft ein Verfahren und eine Vorrichtung zur Herstellung von zumindest teilweise entbastem Wasser mit mindestens einer ersten Tauschersäule, die mit einem insbesondere stark sauren Austauscherharz für Kationen beschickt ist und die flussaufwärts mit einem Wassereinlass für zu entbasendes Wasser und flussabwärts mit einem Wasserauslauf für das entbaste Wasser ausgestattet ist.

Wasser durchläuft während des natürlichen Wasserkreislaufs in der Natur unterschiedliche Bodenschichten und löst dabei carbonathaltige Feststoffe, man vergleiche Sontheimer/Spindler/Rohmann 1980 "Kalk-Kohlensäure-Gleichgewicht". Auf diese Weise gelangen verschiedene Ionen und insbesondere Calcium- und Magnesiumionen in die meisten natürlich vorkommenden Wässer, welche zur Trinkwasserversorgung herangezogen werden.

Diese im Wasser gelösten Erdalkaliionen können in Trinkwasseranlagen, die beispielsweise im Haushalt oder auch in der Industrie eingesetzt werden, durch verschiedene äußere Einflüsse in fester Form ausfallen und Ablagerungen bilden, beispielsweise in Form von Calciumcarbonat. Derartige Ablagerungen finden sich unter anderem auf der Innenseite von Rohren, sonstigen wasserführenden Komponenten und insbesondere in denjenigen Bereichen, in denen das Wasser erwärmt wird. Derartige Ablagerungen bilden sich umso mehr, je härter das verwendete Wasser ist.

Zur Verhinderung derartiger Ablagerungen werden normalerweise die sogenannten Härtebildner aus dem Wasser entfernt. Dazu kann man beispielsweise Ionenaustauscher einsetzen, welche die unerwünschten Ionen, beispielsweise die Ca²⁺ - und Mg²⁺-Ionen aus dem Elektrolyten beziehungsweise Wasser durch Ionen ersetzt, welche aus dem Polyelektrolyten beziehungsweise dem Ionenaustauscherharz abgegeben werden und zu keinen Ablagerungen führen. Dazu zählen beispielsweise Na⁺-Ionen. Eine derartige klassische Wasseraufbereitung wird üblicherweise als Enthärtung bezeichnet.

Nach der Erschöpfung des zur Anwendung gebrachten Ionenaustauscherharzes muss dieses regeneriert werden, was üblicherweise mittels einer gesättigten Kochsalzsole erfolgt. Bei den klassischen Enthärtungsanlagen führt dies zu einem kosten- und zeitintensiven Aufwand, da die Bindungsfähigkeit der zweiwertigen Erdalkaliionen am Austauscherharz wesentlich stärker ist als die Bindungsfähigkeit der einwertigen Natriumionen. Es muss somit erheblich mehr Kochsalzlösung und Spülwasser zum Einsatz kommen als die notwendige, berechnete Menge, um das Harzbett wieder mit Natriumionen zu beladen.

Ein weiterer schwerwiegender Nachteil solcher Neutralaustauscher besteht darin, dass das damit erhaltene Wasser eine wesentlich höhere Salinität als das Rohwasser aufweist. Zudem bedarf es einer kontinuierlichen Kontrolle der Salzsole beziehungsweise des Füllstandes des im Vorlagebehälter zur Regeneration befindlichen Salzes, das üblicherweise in Form von Salztabletten vorliegt.

Eine Überdimensionierung der Solebehälter ist nicht realisierbar, da ansonsten das Salz zu festen Klumpen gepresst wird und sich nicht richtig bis zur Sättigung im Wasser löst.

Es ist ferner auch schon bekannt, stark saure Kationenaustauscherharze im Wasserstoff-Regenerations-Zyklus für die Wasseraufbereitung einzusetzen. Dies gilt insbesondere für die industrielle Verfahrenstechnik der Wasseraufbereitung. Während der Betriebsphase derartiger Kationenaustauscherharze werden die im aufzubereitenden Wasser befindlichen Erdalkaliionen durch H⁺-lonen ersetzt. Zur Regeneration dieser Kationenaustauscherharze werden dann Säuren eingesetzt, um die am Kationenaustauscherharz adsorbierten Alkaliionen durch H⁺-lonen zu ersetzen.

In der industriellen Verfahrenstechnik wird ein derartiger Vorgang als Entbasung bezeichnet. Die Regeneration erfolgt mittels Salz- oder Schwefelsäure, welche den Wasserstoff zur Regeneration zur Verfügung stellen.

Eine derartige Vorgehensweise hat sich im Haushaltsbereich für die Wasseraufbereitung nicht durchsetzen können. Dies liegt zum einen daran, dass es sich bei den Regeneriermitteln für die Kationenaustauscherharze um starke Säuren handelt, von denen ein gewisses Bedrohungspotential bei deren Anwendung ausgeht. Andererseits gestaltet sich die eigentliche Zudosierung der Säure schwierig und darf nur in Form von gebrauchsfertigen Lösungen/Konzentrationen erfolgen.

Es sind auch schon Vorrichtungen und Verfahren zum Entfernen von Kationen/Anionen aus Flüssigkeiten mit einem die Flüssigkeit enthaltenden Behälter bekannt, in dem eine Schicht von lonenaustauschermaterial als auch eine Kathode und eine Anode angeordnet sind, an denen Spannung anliegt, wobei zwischen der Anode und der Kathode die Schicht von lonenaustauschermaterial angeordnet ist. Dabei werden die Flüssigkeiten einem Spannungsfeld ausgesetzt, wodurch die in der Flüssigkeit sich befindenden Ionen voneinander getrennt werden und/oder in feinster Verteilung als fester Niederschlag ausfallen. Diesbezüglich wird auf die EP 0 462 523 B1 verwiesen.

Aufgabe der vorliegenden Erfindung ist es, einen Weg aufzuzeigen, insbesondere stark saure Kationenaustauscher für die Herstellung von zumindest teilweise entbastem Wasser einzusetzen, ohne für die Neu-Beladung des Harzbettes mit Wasserstoff und somit für die Regeneration gefährliche und schwierig zu handhabende Säuren einzusetzen.

Gelöst wird diese Aufgabe durch eine Vorrichtung und ein Verfahren gemäß der Lehre der Ansprüche.

Die erfindungsgemäße Vorrichtung ist mit einer Einrichtung zur Regeneration des erschöpften Austauscherharzes ausgestattet und besitzt eine flussaufwärts an der Tauschersäule angeordnete Kathode und eine flussabwärts an der Tauschersäule angeordnet Anode. Zudem ist die erfindungsgemäße Vorrichtung mit Mitteln ausgestattet, um eine Spannung an die Anode und die Kathode anzulegen. Ferner ist das Austauscherharz zwischen der Anode und der Kathode angeordnet.

Die eigentliche Tauschersäule (hier auch als erste und zweite Tauschersäule bezeichnet) besitzt einen insbesondere länglichen Hohlkörper mit beliebigem Querschnitt, beispielsweise kreisförmig, oval, eckig etc. Dieser Hohlkörper ist aus einem geeigneten Material, beispielsweise Polyvinylchlorid oder glasfaserverstärktem Kunststoff, gefertigt und an seinem Wassereinlass und Wasserauslauf fluiddicht mit den entsprechenden Baugruppen und Komponenten, beispielsweise Rohren und Leitungen verbunden.

Die Anode wird vorzugsweise aus Titan hergestellt. Weiterhin bevorzugt ist auf die Anode eine Mischoxidbeschichtung, insbesondere aus Iridium/Rhodium-Mischoxid, aufgetragen und eingebrannt. Dies ist vorteilhaft, da die Anode eine Elektrodenfunktion ausüben. Die Anode ist natürlich mit einem elektrischen Anschluss versehen.

Die Kathode ist zweckmäßigerweise aus Edelstahl mit der Materialgüte V₂A oder besser gefertigt.

Die Tauschersäule(n) kann/können in beliebiger Orientierung in der erfindungsgemäßen Vorrichtung angeordnet sein. Vorzugsweise wird/werden die Tauschersäulen() jedoch horizontal oder vertikal angeordnet.

Im Falle einer horizontalen Ausrichtung der Tauschersäule erstrecken sich die Elektroden (d. h. Anode und Kathode) über einen Abschnitt der Baulänge und vorzugsweise im Wesentlichen über die gesamte Baulänge des Hohlkörpers. Die Anode ist dabei im oberen Bereich angeordnet, während sich die Kathode im unteren Bereich befindet. Dazwischen ist das Austauscherharz angeordnet.

Nach einer anderen Ausführungsform ist die Tauschersäule im Wesentlichen vertikal ausgerichtet. Die Erfindung wird nachstehend aus Gründen der einfacheren Darstellbarkeit unter Bezug auf diese vertikale Ausführungsform näher beschrieben. Diese Ausführungen beziehen sich jedoch direkt oder in analoger Weise auf die horizontale oder auch schräge Ausführungsform.

Bei der vertikalen Ausführungsform ist die Kathode im unteren Einlassbereich der Tauschersäule angeordnet und in den Hohlkörper eingepasst.

Oberhalb des Austauscherharzes befindet sich die Anode, die ebenfalls in den Hohlkörper der Tauschersäule eingepasst ist.

Im Betriebszustand tritt das mit Erdalkaliionen belastete Rohwasser am unteren Ende der Tauschersäule in diese ein und durchdringt das Harzbett. Dabei werden alle Kationen gegen Wasserstoff ausgetauscht; d.h. im Auslauf erhält man entbastes Wasser. Von entbastem Wasser spricht man in der industriellen Wasseraufbereitung, da alle Kationen (Basenbildner) dem Wasser entzogen werden.

Die Filterkapazität der erfindungsgemäßen Vorrichtung hängt von der Befüllmenge der Tauschersäule mit dem Austauscherharz, der vorhandenen Rohwassergüte und dem Durchsatz an Rohwasser ab. Ist die Kapazität des Austauscherharzes erschöpft, muss es regeneriert werden.

Zur Regeneration wird eine Spannung an die Anode und die Kathode derart angelegt, dass ein Strom fließt. Dabei wird während dieser Regenerationsphase Wasserstoff an der Kathode generiert, der in der Tauschersäule aufsteigt und vom Austauscherharz adsorbiert wird, wobei die vormals dort befindlichen Ca²⁺-ionen in das Wasser abgegeben werden. Weitere Einzelheiten der Verfahrensführung und der dabei auftretenden Phänomene sind nachstehend näher beschrieben.

Das in der erfindungsgemäßen Vorrichtung eingesetzte Austauscherharz ist im Übrigen bekannt. Es handelt sich dabei beispielsweise um einen stark sauren, gelförmigen Kationenaustauscher auf der Basis eines Styrol-Divinylbenzol-Copolymerisates. Ein erfindungsgemäß einsetzbares Austauscherharz ist beispielsweise LEWATIT^{®} MonoPlus S 100 H.

Nach einer bevorzugten Ausführungsform stellen die Kathode oder die Anode oder beide ein Sieb dar. Die Anode schließt dabei den Raum, in dem sich das Austauscherharz befindet, nach flussabwärts und somit oben in der Tauschersäule ab, während die Kathode diesen Raum nach flussaufwärts und somit unten an der Tauschersäule abschließt.

Nach einer weiteren bevorzugten Ausführungsform liegt das Austauscherharz auf der Kathode auf; die Kathode stellt somit den Stützboden sowie eine Art Siebboden für das Austauscherharz dar.

Die Kathode ist zweckmäßigerweise aus einem Edelstahlblech der Materialgüte V₂A oder besser gefertigt.

Um eine gleichmäßige Durchströmung des Rohwassers durch das Harzbett zu gewährleisten, ist das Edelstahlblech zweckmäßigerweise mit Schlitzen versehen. Je nach der Größe und Ausgestaltung des Hohlkörpers zur Aufnahme des Austauscherharzes werden die Schlitze in dem Edelstahlblech der Kathode zweckmäßigerweise derart angeordnet, dass nach den allgemeinen Regeln der Fluidik ein gleichmäßiger Durchsatz des Wassers durch den Siebboden erreicht wird, und zwar ohne dass die maßgeblich angeströmten laminaren Bereiche bevorzugt sind. Dies wird dadurch erreicht, dass in dem Edelstahlblech die Anzahl der Schlitze mit einer jeweils definierten Durchsatzfläche (Länge x Breite der Schlitze beziehungsweise Kreisausschnittsfläche) zum äußeren Rand hin ansteigt. Mit anderen Worten, zum Rand hin befinden sich mehr Schlitze als zur Mitte hin. Dadurch wird erreicht, dass das Wasser gleichmäßig das Harzbett von unten nach oben durchströmt.

Der zwischen der Anode und der Kathode befindliche Raum wird mit dem Austauscherharz gefüllt, wobei natürlich das Quellverhalten des Austauscherharzes berücksichtigt werden muss.

Die Anode beziehungsweise das die Anode bildende Sieb stellt eine Art zweiten Siebboden beziehungsweise zweites Siebblech dar, durch das das entbaste Wasser nach oben in Richtung des Auslaufes der Tauschersäule verlässt.

Die Anode und somit für die das obere Sieb bildende Anode gilt bezüglich des Materials, aus dem sie bzw. es hergestellt ist, das oben Gesagte.

Flussabwärts von der Anode und somit oberhalb von der Anode ist in der Tauschersäule vorzugsweise eine weitere Kathode angeordnet, an die Spannung angelegt werden kann. Zweckmäßigerweise handelt es sich dabei um ein zweites Edelstahlblech mit der Materialgüte V₂A oder besser. Diese weitere Kathode besitzt insbesondere die Form eines Kegelstumpfes, worauf nachstehend noch näher eingegangen wird.

Um die erfindungsgemäße Vorrichtung kontinuierlich zur Herstellung von zumindest teilweise entbastem Wasser einsetzen zu können, ist vorzugsweise eine zweite Tauschersäule in der Vorrichtung vorhanden, welche der ersten Tauschersäule im Wesentlichen entspricht. Beide Tauschersäulen sind dabei derart miteinander verbunden, dass die Vorrichtung mindestens die weiter unten beschriebenen Zustände einnehmen kann. Mit dem Ausdruck "miteinander verbunden" wird zum Ausdruck gebracht, dass die beiden Tauschersäulen mittels üblicher Rohre, Verbindungen, Ventile und Schaltungen bekannter Art und bekannten Typs verschiedene Schaltzustände beziehungsweise Betriebsphasen einnehmen können.

Bei diesen Betriebsphasen handelt es sich dabei insbesondere um folgende:
I) Die erste Tauschersäule befindet sich im Betriebszustand, in dem Rohwasser durch sie hindurchgeleitet und dieses Rohwasser entbast wird, während sich die zweite Tauschersäule im Ruhezustand befindet, in dem kein Wasser durch sie hindurchströmt.
II) Beide Tauschersäulen sind in Reihe geschaltet, wobei sich eine Tauschersäule im Betriebszustand befindet, in dem Rohwasser durch sie hindurchgeleitet wird und das dabei erhaltene, entbaste Wasser teilweise als Spülwasser zur anderen, im Regenerationszustand befindlichen Tauschersäule geführt wird.
III) Die zweite Tauschersäule befindet sich im Betriebszustand, in dem Rohwasser durch sie hindurchgeleitet und dieses Rohwasser entbast wird, während sich die erste Tauschersäule im Ruhezustand befindet, in dem kein Wasser durch sie hindurchströmt.

Zum kontinuierlichen Entbasen beziehungsweise Entkalken von Wasser wird am Anfang und somit in der Betriebsphase I) das Rohwasser in der ersten Tauschersäule entbast, während die zweite Tauschersäule "abgeschaltet" ist und keine Funktion ausübt.

Ist die erste Tauschersäule erschöpft, dann wird in den Regenerationszustand und somit in die Betriebsphase II) übergegangen. Beide Tauschersäulen sind dabei in Reihe geschaltet. Ist die erste Tauschersäule erschöpft, dann befindet sich die zweite Tauschersäule im Betriebszustand, in dem Rohwasser durch sie hindurchgeleitet wird, um entbastes Wasser zu erhalten. Das dabei erhaltene entbaste Wasser wird jedoch außerdem zusätzlich teilweise als Spülwasser zur anderen, erschöpften beziehungsweise im Regenerationszustand befindlichen zweiten Tauschersäule geführt. An die untere Kathode und die Anode der zweiten Tauschersäule ist eine Spannung angelegt, so dass Wasserstoff entsteht und durch das Austauscherharz der zweiten Säule hindurchdringt beziehungsweise in gasförmigem Zustand hindurchperlt.

Ist das Austauscherharz der ersten Tauschersäule regeneriert, wird die Anlage derart geschaltet, dass sich die erste Tauschersäule im Ruhezustand befindet. Die zweite Tauschersäule befindet sich nach wie vor im Betriebszustand, in dem Rohwasser durch sie hindurchgeleitet und dieses Rohwasser entbast wird.

Ist die zweite Tauschersäule erschöpft, dann wird wieder in die Betriebsphase 11) geschaltet, wobei jedoch die beiden Tauschersäulen "vertauscht" sind.

Nach der Betriebsphase II) wird wieder in die Betriebsphase I) übergegangen. Dieser Wechsel der Betriebsphasen kann beliebig oft wiederholt werden.

Auf diese Weise ist es möglich, mit der erfindungsgemäßen Vorrichtung kontinuierlich entbastes Wasser zur Verfügung zu stellen und gleichzeitig und somit während der Durchführung des Verfahrens zur Herstellung von zumindest teilweise entbastem Wasser eine Tauschersäule zu regenerieren.

Es versteht sich von selbst, dass beliebig viele erste und zweite Tauschersäulen miteinander kombiniert und entsprechend geschaltet werden können.

Die weitere, oberhalb beziehungsweise flussabwärts von der Anode angeordnete Kathode dient dazu, bei einer im Betriebszustand befindlichen Tauschersäule während der Betriebsphase II) oxidative Substanzen in dem entbasten Wasser zu erzeugen. Dazu wird eine Spannung an die Anode und die oberhalb davon beziehungsweise flussabwärts davon befindliche Kathode angelegt. Die andere, am Eingang der Tauschersäule befindliche Kathode wird nicht mit Strom beaufschlagt.

Dadurch ist es möglich, in dem entbasten Wasser, das gleichzeitig als Spülwasser für die andere Tauschersäule eingesetzt wird, eine Elektrolyse durchzuführen. Dabei werden im Rohwasser vorhandene Chloride beim Durchströmen der im Betriebszustand befindlichen Tauschersäule in unterchlorige Säule beziehungsweise Chlordioxid umgewandelt. Außerdem entsteht Ozon und Wasserstoffperoxid. Diese oxidativen Substanzen sind in der Wasserwirtschaft seit langem als Trinkwasserdesinfektionsmittel alleine bekannt und sorgen durch die Anreicherung im Spülwasser für eine Desinfektion des im Regenerationszustand befindlichen Austauscherharzes.

In der im Betriebszustand befindlichen Tauschersäule findet daher zwischen der Anode beziehungsweise dem oberen Siebblech und der oberhalb beziehungsweise flussabwärts davon befindlichen Kathode eine Art Durchflusselektrolyse statt.

Gegenstand der Erfindung ist somit auch ein Verfahren zum zumindest teilweisen und insbesondere kontinuierlichem Entbasen von Wasser, bei dem Rohwasser mit Hilfe eines insbesondere stark sauren Austauscherharzes für Kationen entbast und das Austauscherharz nach Erschöpfung regeneriert wird. Dazu wird das Austauscherharz mit Hilfe von durch das Austauscherharz strömenden, elektrolytisch im Verfahren erzeugten Wasserstoff regeneriert.

Vorzugsweise wird bei Regeneration entbastes Wasser als Spülwasser für das Austauscherharz eingesetzt. Dadurch kann Folgendes erreicht werden.

Da aufgrund der Strombeaufschlagung der im Regenerationszustand befindlichen Tauschersäule eine sehr starke Alkalität im Bereich der Kathode auftritt, sollte während der Regeneration entbastes Wasser eingesetzt werden. Würde nämlich Rohwasser mit seiner Gesamtmenge an Erdalkaliionen als Spülwasser verwendet, käme es zu einer kathodischen Kalkausfällung. Dadurch würde die Leitfähigkeit der Kathode beeinträchtigt und der Gesamtwiderstand erhöht werden. Auf Dauer wäre die Funktionsfähigkeit der Tauschersäule in Frage gestellt.

Die Erfindung wird im Folgenden anhand der skizzenhaften, nicht maßstabsgetreuen und nur die wichtigsten Details wiedergebenden Zeichnungen näher erläutert. Dabei zeigen
- Fig. 1: eine schematische Ansicht einer Tauschersäule für eine erfindungsgemäße Vorrichtung,
- Fig. 2: ein Schaltschema einer erfindungsgemäßen Vorrichtung mit zwei Tauschersäulen.

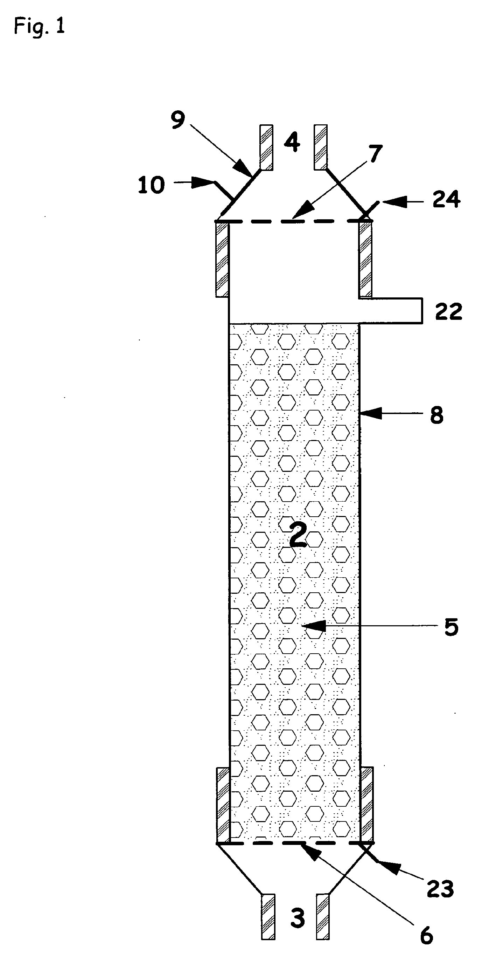

Die in der Fig. 1 gezeigte Tauschersäule 2 stellt ein rohrförmiges Behältnis dar, das sich zum Wassereinlass 3 und Wasserauslauf 4 verjüngt. Die Tauschersäule 2 ist mit einem stark sauren Austauscherharz 5 für Kationen, beispielsweise LEWATIT^{®} MonoPlus S 100 H befüllt, das durch den Stutzen 22 eingefüllt wurde. Die Menge des eingefüllten Austauscherharzes 5 wird unter Berücksichtigung des Quellverhaltens dieses Harzes und natürlich unter Berücksichtigungen der Abmessungen der Tauschersäule 2 festgelegt.

Die Tauschersäule 2 ist vertikal ausgerichtet. In ihrem unteren und somit flussaufwärts liegenden Bereich ist eine Kathode 6 in Form eines mit Schlitzen versehenen Edelstahlbleches angeordnet, auf der das Austauscherharz 5 aufliegt. Mit anderen Worten, die Kathode 6 stellt eine Art Stütz- beziehungsweise Siebboden für das Austauscherharz 5 dar. Das Edelstahlblech besitzt dabei die Materialgüte V2A oder besser.

Die Kathode 6 begrenzt denjenigen Raum 8, in dem sich das Austauscherharz 5 befindet, nach unten beziehungsweise nach flussaufwärts.

Flussabwärts von dem Austauscherharz 5 befindet sich eine Anode 7 ebenfalls in Form eines geschlitzten Bleches, das denjenigen Raum 8, in dem sich das Austauscherharz befindet, nach oben beziehungsweise nach flussabwärts abschließt.

Die Kathode 6 und die Anode 7 sind jeweils mit einem elektrischen Anschluss 23 beziehungsweise 24 zur Herstellung einer elektrischen Verbindung ausgestattet. Die Anode 7 ist aus Titan hergestellt und weist eine Mischoxidbeschichtung (Iridium/Rhodium) auf, die eingebrannt ist.

Oberhalb der Anode 7 und somit flussabwärts befindet sich eine weitere Kathode 9 mit einem elektrischen Anschluss 10, welche kegelstumpfartig ausgebildet ist und aus einem Edelstahlblech mit der Materialgüte V₂A oder besser gefertigt ist.

Bedingt durch die Ausgestaltung der Anode 7 in Form einer Art Siebgitter wird vermieden, dass das Austauscherharz 5 in Richtung des Wasserauslaufes 4 gelangen kann.

In der Betriebsphase I) tritt Rohwasser beziehungsweise mit Erdalkaliionen belastetes Wasser am Wassereinlass 3 in die Tauschersäule 2 ein, wird durch die als unterer Siebboden ausgestaltete Kathode 6 verteilt und durchdringt gleichmäßig das Harzbett beziehungsweise das Austauscherharz 5.

Dabei werden - wie oben bereits dargelegt - alle Kationen gegen Wasserstoff ausgetauscht. Am Wasserauslauf 4 wird somit entbastes Wasser erhalten, das als solches oder nach Verschneiden mit Rohwasser verwendet werden kann, worauf nachstehend noch näher eingegangen wird. Je nach der in der Tauschersäule 2 befindlichen Menge an Austauscherharz 5 und den Dimensionen der Tauschersäule 2 sowie dem Durchsatz an Rohwasser wird die Tauschersäule 2 ans Ende ihrer Austauschkapazität gelangen, so dass eine Regeneration erforderlich ist.

Zur Regeneration wird eine Spannung an die Kathode 6 und die Anode 7 angelegt, so dass ein Strom fließt. Die Spannung wird dabei entsprechend der Kammerdimensionierung gewählt. Das durch die Tauschersäule 2 fließende Wasser dient als Elektrolyt zwischen Anode und Kathode. Wird Strom durch das Wasser geleitet, bildet sich molekularer Wasserstoff in Form von Wasserstoffbläschen, die aufgrund der vertikalen Ausrichtung der Tauschersäule 2 durch das Bett aus dem Austauscherharz 5 von unten nach oben gelangen. Dadurch ist gewährleistet, dass der entstandene Wasserstoff eine möglichst maximale Kontaktfläche und Kontaktzeit zum Austauscherharz hat, um die gebundenen Erdalkaliionen zu lösen, welche dann wiederum durch das durch die Tauschersäule 2 fließende Spülwasser abgeführt werden.

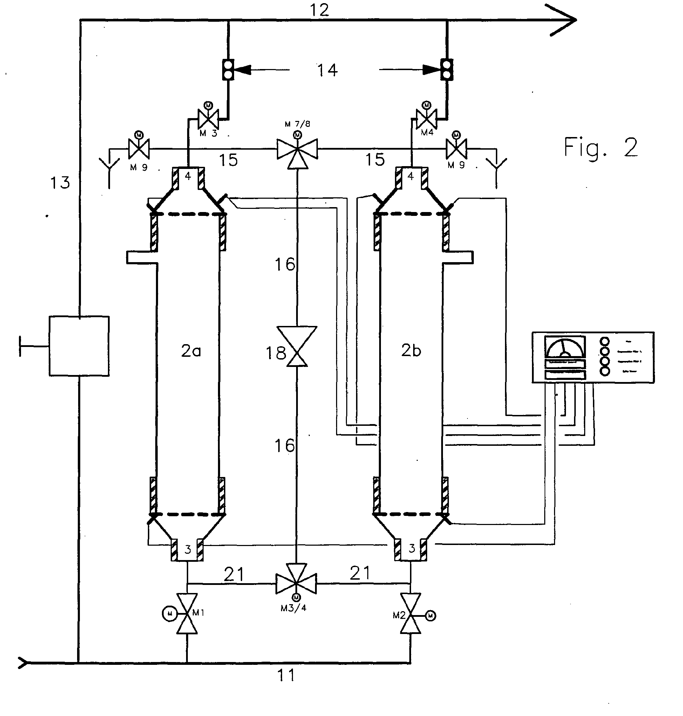

In der Fig. 2 ist ein Schaltschema für eine erfindungsgemäße Vorrichtung 1 mit zwei Tauschersäulen 2a und 2b gezeigt. Diese Tauschersäulen 2a und 2b entsprechen der in der Fig. 1 gezeigten Tauschersäule 2.

Die Tauschersäulen 2a und 2b können über eine Rohwasserleitung 11 mit Rohwasser versorgt werden. Das durch die Tauschersäulen 2a und 2b hindurchgeflossene Wasser kann über eine Leitung 12 zum Verbrauchsort geführt werden. Zwischen der Rohwasserleitung 11 und den Tauschersäulen 2a beziehungsweise 2b sind jeweils ein Magnetventil M1 und M2 angeordnet. Flussabwärts befindet sich zwischen dem Wasserauslauf 4 der beiden Tauschersäulen 2a, 2b jeweils ein Magnetventil M3 beziehungsweise M4.

Während der Betriebsphase I) befindet sich die erste Tauschersäule 2a im Betriebszustand, in dem Rohwasser durch sie hindurchgeleitet und entbast wird. Dazu sind die Ventile M1 und M3 geöffnet. Das entbaste Wasser wird über die Leitung 12 zum Verbrauchsort abgeführt und kann mit Rohwasser beziehungsweise Hartwasser über die Leitung 13 verschnitten werden, damit das dem Verbrauch zugeführte Wasser über die erforderliche Anzahl an zumindest Alkaliionen verfügt. Hinter den Ventilen M3 und M4 ist jeweils ein Volumenstromzähler 14 angeordnet.

Während dieser Betriebsphase I) befindet sich die zweite Tauschersäule 2b im Ruhezustand. Die Magnetventile M2 und M4 sind geschlossen.

Die Anoden 7 und Kathoden 6 beider Tauschersäulen 2a und 2b sind nicht strombeaufschlagt, so dass kein Strom fließt und auch keine Elektrolyse stattfindet.

Sobald die Tauschersäule 2a (genauer das darin befindliche Austauscherharz 5) erschöpft ist, wird in die Betriebsphase II) übergegangen.

Dazu werden die Ventile M2 und M4 geöffnet, so dass die zweite Austauschersäule 2b in den Betriebszustand übergeht und entbastes Wasser beziehungsweise Weichwasser in die Leitung 12 abgeben kann.

Die erste Tauschersäule 2a muss aufgrund der erschöpften Austauscherharzkapazität in den Regenerationszustand gebracht werden. Dazu wird entbastes Wasser aus der Tauschersäule 2b über die Leitung 15, das Dreiwegeventil M7/8, die Leitung 16 mit dem Laborkugelhahn18, dem Dreiwegeventil M4/3 über die Leitung 21 zum Wassereinlass 3 der ersten Tauschersäule 2a geleitet.

An die Kathode 6 und die Anode 7 der ersten Tauschersäule 2a wird eine Spannung angelegt, so dass ein Strom fließt, der Wasser in seine Bestandteile Wasserstoff und Sauerstoff elektrolytisch zerlegt. Die an der Kathode 6 der ersten Tauschersäule 2a erzeugten Wasserstoffbläschen durchdringen das Austauscherharz 5 von unten nach oben.

Die Spülwassermenge wird mittels des Laborkugelhahnes 18 in der Leitung 16 derart eingestellt, dass ausreichend Spülwasser zur Verfügung steht, um die in der ersten Tauschersäule 2a vom Austauscherharz losgelösten Ca²⁺-lonen auszuschwemmen. Der Spülwasserstrom darf jedoch nicht so stark sein, dass der gebildete Wasserstoff zu stark mitgerissen wird. Das aus der Tauschersäule 2a ausgeströmte Spülwasser wird über das Ventil M9 ausgeleitet.

Das Magnetventil M9 wird daher vorzugsweise temporär getaktet, wodurch eine stoßweise und nicht kontinuierliche Einspeisung des Spülwassers erzielt wird. Dies hat den genannten Vorteil, dass der generierte Wasserstoff nicht mitgerissen und somit nicht zu schnell aus der Tauschersäule 2a ausgeschwemmt wird.

Der Grund dafür, dass während der Regeneration der ersten Tauschersäule 2a entbastes Wasser aus der im Betriebszustand befindlichen Tauschersäule 2b verwendet wird, liegt im Folgenden. Aufgrund der Strombeaufschlagung der im Regenerationszustand befindlichen Tauschersäule 2a tritt im Bereich der Kathode 6 eine starke Alkalität auf. Würde Rohwasser mit seinen Erdalkaliionen als Spülwasser verwendet werden, könnte es zu einer kathodischen Kalkausfällung kommen. Die dabei entstehenden Ablagerungen haben eine wesentlich schlechtere elektrische Leitfähigkeit als das für die Kathode verwendete Material (Edelstahl). Dadurch würde der Gesamtwiderstand in der Tauschersäule erhöht werden.

In der Betriebsphase II) liegt zwischen der Anode 7 und der weiteren Kathode 9 der zweiten Tauschersäule 2b eine Spannung an, so dass im Bereich des Wasserauslaufes 4 der im Betriebszustand befindlichen zweiten Tauschersäule 2b eine Elektrolyse stattfindet. Die an die Anode 7 und die weitere Kathode 9 angelegte Spannung beträgt dabei >8,2 Volt, damit direkt an der Anode ausreichend viel Sauerstoff erzeugt wird, um verschiedene oxidative Stoffe zu generieren. Es findet dabei eine Art Durchflusselektrolyse statt, so dass das aus der zweiten Tauschersäule 2b austretende entbaste Wasser, das teilweise als Spülwasser für die erste Tauschersäule 2a verwendet wird, unterchlorige Säure, Chlordioxid sowie Ozon und Wasserstoffperoxid aufweist. Diese oxidativen Substanzen dienen in der im Regenerationszustand befindlichen ersten Tauschersäule 2a zur Desinfektion des Austauscherharzes.

Zusammenfassend werden für die Durchführung der Betriebsphase II) folgende Schaltungen und Einstellungen vorgenommen.

Die erste Tauschersäule 2a wird durch Schließen der Magnetventile M1 und M3 abgetrennt. Zum Austragen des Spülwassers in das Abwasser muss das Ventil M9, der Tauschersäule 2a geöffnet sein. Die Ventile M7/8 und M4/3 werden derart eingestellt, dass entbastes Wasser vom Ausgang der im Betriebszustand befindlichen Tauschersäule 2b zum Wassereinlass 3 der im Regenerationszustand befindlichen Tauschersäule 2a geleitet wird.

In der im Regenerationszustand befindlichen Tauschersäule 2a wird durch den an die Anode 7 und die Kathode 6 angelegte Spannung Wasserstoff zur Regeneration ausgebildet.

Während der Regeneration fließt zwischen der Anode 7 und der Kathode 6 ein Strom von >2,2 Volt und ca. 4 Ampere. Zur Regeneration würden etwa 25 mg Wasserstoff pro Liter Harz benötigt. Je nach Einsatzbereich differiert die Menge an Austauscherharz in der Tauschersäule, so dass die Regeneration entsprechend lange durchgeführt werden muss.

Die erforderliche Menge an Wasserstoff wird gemäß dem Faradayschen Gesetz: M_{H2}=(I x t x M_{H2})/(F x z) errechnet. Dabei bedeuten I = Stromstärke, t = Zeitdauer des Stromflusses, M_{H2} = Molmasse des Wasserstoffs, F = Faraday Konstante, z = Wertigkeit des Wasserstoffs.

Aus obiger Gleichung ist ersichtlich, dass Änderungen der einzelnen Parameter I und/oder t die Menge an erzeugtem Wasserstoff verringert oder erhöht. Durch Einstellen dieser Parameter ist eine effektive Regeneration möglich, ohne zuviel oder zuwenig Wasserstoff zu erzeugen. Es ist dabei darauf zu achten, dass weder zu wenig noch zu viel Wasserstoff erzeugt wird. Zu wenig Wasserstoff würde das Austauscherharz nicht vollständig regenerieren, so dass ich die Filterkapazität des Austauscherharzes nachhaltig verringern würde. Ein frühzeitiger Hartwasser-Durchbruch wäre die Folge. Wird zu viel Wasserstoff gebildet, könnte dies zur Bildung von hochexplosivem Knallgas führen.

In der Betriebsphase III) wird die erfindungsgemäße Vorrichtung derart geschaltet, etc., dass sich die zweite Tauschersäule 2b im Betriebszustand befindet, während sich die erste Tauschersäule 2a im Ruhezustand befindet, in dem kein Wasser durch sie hindurchströmt. Entsprechend sind die Ventile zu schließen beziehungsweise zu öffnen. Die Betriebsphase I) und die Betriebsphase III) unterscheiden sich lediglich durch die Leitungsführungen, um die bereits dargelegten Fließrichtungen einzuhalten. Entscheidend ist lediglich Folgendes. Eine Tauschersäule sichert die Bildung von entbastem Wasser, während die andere Tauschersäule sich im Ruhezustand befindet. Ist die Filterkapazität einer Tauschersäule erschöpft, wird diese regeneriert, während die andere Tauschersäule die Bildung von entbastem Wasser aufrecht erhält. Auf diese Weise ist eine kontinuierliche Herstellung von entbastem Wasser möglich, ohne dass eine Unterbrechung zum Zwecke der Regeneration stattfindet.

Um von der Betriebsphase III) wiederum in die Betriebsphase I) zu gelangen, wird wieder die Betriebsphase II) durchlaufen, in der jedoch die Tauschersäulen 2a und 2b "vertauscht" sind. Diese Zyklen der Betriebsphasen I) bis III) und retour können beliebig oft wiederholt werden.

### Bezugszeichenliste

- 1: Vorrichtung
- 2, 2a, 2b: Tauschersäule
- 3: Wassereinlass
- 4: Wasserauslauf
- 5: Austauscherharz
- 6: Kathode
- 7: Anode
- 8: Raum
- 9: weitere Kathode
- 10: elektrischer Anschluss für Kathode 9
- 11: Rohwasserleitung
- 12: Leitung
- 13: Leitung
- 14: Volumenstromzähler
- M1, M2, M3, M4, M9: Ventile
- M4/3, M7/8: Dreiwegeventile
- 15, 16, 21: Leitungen für Spülwasser
- 18: Laborkugelhahn
- 19:
- 20:
- 21: Leitung
- 22: Stutzen
- 23: elektrischer Anschluss für Kathode 6
- 24: elektrischer Anschluss für Anode 7

## Patentansprüche

1. Vorrichtung zur Herstellung von zumindest teilweise entbastem Wasser mit mindestens einer ersten Tauschersäule (2, 2a), die mit einem insbesondere stark sauren Austauscherharz (5) für Kationen beschickt ist und die flussaufwärts mit einem Wassereinlass (3) für zu entbasendes Wasser und flussabwärts mit einem Wasserauslauf (4) für das entbaste Wasser ausgestattet ist,
**dadurch gekennzeichnet, dass**
die Vorrichtung (1) mit einer Einrichtung zur Regeneration des erschöpften Austauscherharzes (5) mit einer in der ersten Tauschersäule (2, 2a) angeordneten Kathode (6) und einer in der ersten Tauschersäule (2, 2a) angeordneten Anode (7) sowie Mitteln, um eine Spannung an die Anode (7) und die Kathode (6) anzulegen, ausgestattet ist und
dass das Austauscherharz (5) zwischen der Anode (7) und der Kathode (6) angeordnet ist.

2. Vorrichtung nach Anspruch 1,
**dadurch gekennzeichnet, dass**
die Anode (7) aus Titan gefertigt sind und eine Mischoxidbeschichtung, insbesondere aus Iridium/Rhodium-Mischoxid, besitzt.

3. Vorrichtung nach Anspruch 1 oder 2,
**dadurch gekennzeichnet, dass**
die erste Tauschersäule (2, 2a) im Wesentlichen vertikal angeordnet ist und
die Kathode (6) und/oder die Anode (7) jeweils ein Sieb darstellt/darstellen und den Raum (8), in dem sich das Austauscherharz (5) befindet, nach flussaufwärts bzw. nach flussabwärts abschließen.

4. Vorrichtung nach Anspruch 3,
**dadurch gekennzeichnet, dass**
das Austauscherharz (5) auf der Kathode (6) aufliegt und die Kathode (6) den Stützboden für das Austauscherharz (5) bildet.

5. Vorrichtung nach einem der vorhergehenden Ansprüche,
**dadurch gekennzeichnet, dass**
eine zweite Täuschersäule (2b) der beschriebenen Art vorhanden ist und dass die erste (2a) mit der zweiten (2b) Tauschersäule derart miteinander verbunden ist, dass sich die Vorrichtung (1) in mindestens folgenden Betriebsphasen befinden kann:
I) die ersten Täuschersäule (2a) befindet sich im Betriebszustand, in dem Rohwasser durch sie hindurchgeleitet und dieses Rohwasser entbast wird, während sich die zweite Tauschersäule (2b) im Ruhezustand befindet, in dem kein Wasser durch sie hindurchströmt,
II) beide Tauschersäulen (2a, 2b) sind in Reihe geschaltet, wobei sich eine Tauschersäule im Betriebszustand befindet, in dem Rohwassser durch sie hindurchgeleitet wird und das dabei erhaltene entbaste Wasser teilweise als Spülwasser zur anderen, im Regenerierungszustand befindlichen Tauschersäule geführt wird, und
III) die zweite Täuschersäule (2b) befindet sich im Betriebszustand, in dem Rohwasser durch sie hindurchgeleitet und dieses Rohwasser entbast wird, während sich die erste Tauschersäule (2a) im Ruhezustand befindet, in dem kein Wasser durch sie hindurchströmt.

6. Vorrichtung nach einem der vorhergehenden Ansprüche mit einer oder mehreren vertikal ausgerichteten Tauschersäule(n) (2, 2a, 2b),
**dadurch gekennzeichnet, dass**
flussabwärts von der Anode (7) in der Tauschersäule (2, 2a, 2b) eine weitere Kathode (9) angeordnet ist, an die eine Spannung angelegt werden kann.

7. Verfahren zum zumindest teilweisen Entbasen von Wasser, bei dem Rohwasser mit Hilfe eines insbesondere stark sauren Austauscherharzes für Kationen entbast und das Austauscherharz nach Erschöpfung regeneriert wird,
**dadurch gekennzeichnet, dass**
das Austauscherharz mit Hilfe von durch das Austauscherharz strömenden, elektrolytisch im Verfahren erzeugtem Wasserstoff regeneriert wird.

8. Verfahren nach Anspruch 7,
**dadurch gekennzeichnet, dass**
bei der Regenerierung entbastes Wasser als Spülwasser für das Austauscherharz eingesetzt wird.

9. Verfahren nach Anspruch 7 oder 8,
**dadurch gekennzeichnet, dass**
oxidative Substanzen zum desinfizieren des zu regenerierenden Austauscherharzes durch Elektrolyse erzeugt werden.

10. Verfahren nach einem der Ansprüche 7 bis 9,
**dadurch gekennzeichnet, dass**
eine Vorrichtung nach einem der Ansprüche 1 bis 6 eingesetzt wird.

11. Verfahren nach einem der Ansprüche 7 bis 10,
**dadurch gekennzeichnet, dass**
das Verfahren kontinuierlich geführt wird.
